# EUROPEAN PATENT APPLICATION

(11) **EP 3 669 645 A1**
(43) Date of publication of application: **24.06.2020**
(21) Application number: 18857944.5
(22) Date of filing: 25.07.2018
(51) Int. Cl.: A01K 29/00, A01K 11/00

(54) **LIVESTOCK INFORMATION MANAGEMENT SYSTEM, LIVESTOCK BARN, LIVESTOCK INFORMATION MANAGEMENT PROGRAM, AND LIVESTOCK INFORMATION MANAGEMENT METHOD**

(30) Priority: 22.09.2017 JP 2017182839
(71) Applicant: Panasonic Intellectual Property Management Co., Ltd., Osaka-shi, Osaka 540-6207 (JP)
(72) Inventor: FUJIYAMA, Hiromitsu, Osaka-shi, Osaka 540-6207 (JP)
(74) Representative: Appelt, Christian W.
(86) International application number: PCT/JP2018/027941
(87) International publication number: WO 2019/058752

(57) **Abstract**

A domestic animal information management system (100) is provided with an imaging unit (10) for acquiring image data of a predetermined area (A) where a domestic animal (501, 502, 503 ... 525) to which identification information (T1, T2, T3 . T25) is attached can move; an identification information acquisition unit (22) for acquiring the identification information (T1, T2, T3 ... T25) for every domestic animal (501, 502, 503 ... 525) on the basis of the image data of the predetermined area (A); a position information acquisition unit (23) for acquiring position information for every domestic animal (501, 502, 503 525) on the basis of the image data of the predetermined area (A); and an information storage unit (25) for storing the identification information (T1, T2, T3 T25) and the position information in association with each other for every domestic animal (501, 502, 503 ... 525).

## Description

### TECHNICAL FIELD

The present invention relates to a domestic animal information management system and the like used to manage information on at least one domestic animal.

### BACKGROUND ART

As disclosed in Patent Literature 1 as an example of a domestic animal information management system, animal individual identification systems for identifying multiple animals have been developed. The animal identification system disclosed in Patent Literature 1 includes a reading device of an individual identification equipment to which an identification symbol is attached, an imaging device for tracking respective movements of multiple animals individually, and a processing device for respectively associating imaged animals with read identification symbols. The animal individual identification system has the reading device and the imaging device both provided in a closed space and thus can track the movement of each of the multiple animals individually throughout the closed space.

### CITATION LIST

### PATENT LITERATURE

Patent Literature 1: Japanese Unexamined Patent Application Publication No. 2010-4861

### SUMMARY OF INVENTION

### TECHNICAL PROBLEM

The animal identification system as the above-described conventional domestic animal information management system can identify and track each of multiple domestic animals. However, this animal identification system does not know position information on each of the multiple domestic animals. On the other hand, knowing the position information on each domestic animal has various advantages in managing the condition of domestic animals. Accordingly, there is a need to know the position information on each domestic animal.

The present invention is made in view of the problem in the conventional technique. The present invention aims to provide a domestic animal information management system, a domestic animal barn, a domestic animal information management program, and a domestic animal information management method for knowing the position information on each of at least one domestic animal.

### SOLUTION TO PROBLEM

To solve the above-described problem, a domestic animal information management system according to a first aspect of the present invention is a domestic animal information management system in which identification information identifying a domestic animal is used on each of at least one domestic animal, including: an imaging unit that acquires image data of a predetermined area in which the at least one domestic animal can move; an identification information acquisition unit that acquires the identification information on each of the at least one domestic animal on the basis of the image data of the predetermined area; a position information acquisition unit that acquires position information on each of the at least one domestic animal on the basis of the image data of the predetermined area; and an information storage unit that stores the identification information and the position information in association with each other for each of the at least one domestic animal.

A barn according to a second aspect of the present invention includes the domestic animal information management system.

A domestic animal information management program according to a third aspect of the present invention is a domestic animal information management program used for a domestic animal information management system in which identification information identifying a domestic animal is used on each of at least one domestic animal, wherein the domestic animal information management program operates a computer as: an identification information acquisition unit that acquires the identification information on each of the at least one domestic animal on the basis of image data of a predetermined area, in which the at least one domestic animal can move, captured by an imaging unit; a position information acquisition unit that acquires position information on each of the at least one domestic animal on the basis of the image data of the predetermined area; and an information storage unit that stores the identification information and the position information in association with each other for each of the at least one domestic animal.

A domestic animal information management method according to a fourth aspect of the present invention is a domestic animal information management method in which identification information identifying a domestic animal is used on each of at least one domestic animal, including: a step of acquiring the identification information on each of the at least one domestic animal on the basis of image data of a predetermined area, in which the at least one domestic animal can move, acquired by an imaging unit; a step of acquiring position information on each of the at least one domestic animal on the basis of the image data of the predetermined area; and a step of storing the identification information and the position information in association with each other for each of the at least one domestic animal.

### ADVANTAGEOUS EFFECTS OF INVENTION

According to each of the domestic animal information management system, the barn, the domestic animal information management program, and the domestic animal information management method of the present invention, the position information on each of at least one domestic animal is known.

### BRIEF DESCRIPTION OF DRAWINGS

[Fig. 1] Fig. 1 is a schematic diagram illustrating a configuration of a barn provided with a domestic animal information management system according to an embodiment of the present invention.
[Fig. 2] Fig. 2 is a diagram illustrating identification information attached to a domestic animal managed by the domestic animal information management system according to the embodiment of the present invention.
[Fig. 3] Fig. 3 is a diagram illustrating a variation of the identification information attached to a domestic animal managed by the domestic animal information management system according to the embodiment of the present invention.
[Fig. 4] Fig. 4 is a longitudinal cross-sectional view of a barn for illustrating a range captured by an imaging unit of the domestic animal information management system according to the embodiment of the present invention.
[Fig. 5] Fig. 5 is a transverse cross-sectional view of the barn for illustrating ranges captured by imaging units of the domestic animal information management system according to the embodiment of the present invention.
[Fig. 6] Fig. 6 is a functional block diagram illustrating a whole configuration of the domestic animal information management system according to the embodiment of the present invention.
[Fig. 7] Fig. 7 is a diagram illustrating image data acquired by the imaging unit of the domestic animal information management system according to the embodiment of the present invention.
[Fig. 8] Fig. 8 is a diagram illustrating image data converted from the image data acquired by the imaging unit of the domestic animal information management system according to the embodiment of the present invention.
[Fig. 9] Fig. 9 is a diagram illustrating identification information and position information that are stored in association with each other with date and time in an information storage unit of the domestic animal information management system according to the embodiment of the present invention.
[Fig. 10] Fig. 10 is a diagram illustrating that a movement amount of a domestic animal is calculated on the basis of position time-series data acquired by a position information acquisition unit of the domestic animal information management system according to the embodiment of the present invention.
[Fig. 11] Fig. 11 is a graph showing transition of movement amounts of every domestic animal estimated, on the basis of the position time-series data, by a movement amount estimation unit of the domestic animal information management system according to the embodiment of the present invention.
[Fig. 12] Fig. 12 is a diagram illustrating individual image data stored in association with identification information and position information in the information storage unit of the domestic animal information management system according to the embodiment of the present invention.
[Fig. 13] Fig. 13 is a diagram illustrating that weight of a domestic animal is estimated, on the basis of the identification information, the position information, and the individual image data, by a weight estimation unit of the domestic animal information management system according to the embodiment of the present invention.
[Fig. 14] Fig. 14 is a graph showing transition of weight of every domestic animal made by the weight estimation unit of the domestic animal information management system according to the embodiment of the present invention.

### DESCRIPTION OF EMBODIMENTS

A domestic animal information management system of an embodiment is described below with reference to the drawings. Throughout the following drawings, elements with the same reference numeral exhibit the same function each other irrespective of slight differences in shape unless otherwise noted.

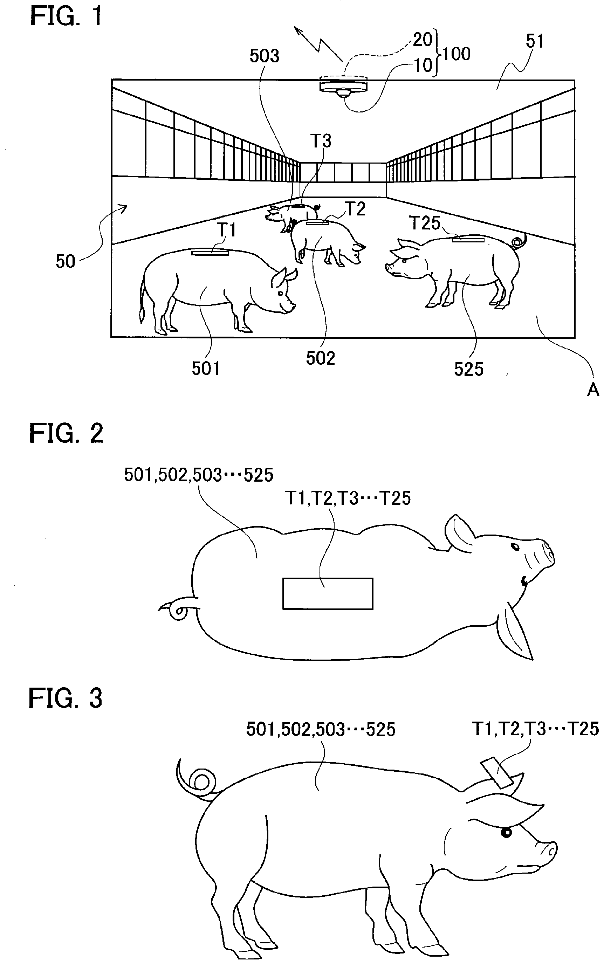

With reference to FIG. 1, a configuration of a barn 50 provided with a domestic animal information management system 100 of an embodiment is described.

As illustrated in Fig. 1, the barn 50 is a structure with walls, a roof, and the like. The barn 50 has a predetermined area A for breeding a domestic animal 501, a domestic animal 502, a domestic animal 503..., and a domestic animal 525 below a ceiling 51. The predetermined area A is an area in which the domestic animal 501, the domestic animal 502, the domestic animal 503..., and the domestic animal 525 can move. The predetermined area A is surrounded on all sides by walls. The number of domestic animals bred in the predetermined area A is multiple in many cases but may be small, such as one or two. The domestic animals 501, 502, 503..., and 525 shown in Fig. 1 are an example of at least one domestic animal.

The barn 50 is provided with the domestic animal information management system 100. The barn 50 has an imaging unit 10 provided on an undersurface of the ceiling 51. The imaging unit 10 acquires image data of all of the domestic animals 501, 502, 503...525 in the predetermined area A. The barn 50 has a control unit 20 provided on an upper side of the ceiling 51. The imaging unit 10 is communicably connected to the control unit 20 and transmits acquired image data to the control unit 20. The domestic animal information management system 100 includes an antenna or the like inside and transmits predetermined information to an external device via a wireless radio wave.

The domestic animals 501, 502, 503...525 in the present embodiment are all pigs. However, the domestic animals 501, 502, 503...525 may be other than pigs, such as cows, horses, or sheep. In the present specification, domestic animals include all the animals bred for human use of products, such as milk, meat, eggs, wool, skin, or fur, labor, or the like.

With reference to Figs. 2 and 3, identification information T1, identification information T2, identification information T3..., and identification information T25 respectively attached to the domestic animals 501, 502, 503...525 managed by the domestic animal information management system 100 of the embodiment are described.

The identification information T1, the identification information T2, the identification information T3..., and the identification information T25 are pieces of information that are different from each other and identify the at least one domestic animal 501, 502, 503...525, respectively. The identification information T1, T2, T3..., and T25 are attached to the domestic animals 501, 502, 503..., and 525 in a one-to-one relationship.

As shown in Fig. 2, the identification information T1, T2, T3...T25 are seals respectively attached to the domestic animals 501, 502, 503...525. The identification information T1, T2, T3...T25 are each put on the body of each of the domestic animals 501, 502, 503... 525, at a position easily captured by the imaging unit 10, such as on the back, in order to increase the probability of being captured by the imaging unit 10.

However, the identification information T1, T2, T3...T25 may each be a paint directly drawn on the back of each of the domestic animals 501, 502, 503...525. The identification information T1, T2, T3...T25 may each be drawn or put on clothing worn by each of the domestic animals 501, 502, 503...525.

Moreover, as shown in Fig. 3, the identification information T1, T2, T3...T25 may each be drawn on or attached to a tag put on each of the domestic animals 501, 502, 503...525 using a hole pierced on the ear thereof.

In the present embodiment, the identification information T1, T2, T3...T25 shown in Figs. 2 and 3 are each a colorbit (R) showing discrimination with an array of different colors. The colorbit (R) is information on a group of arranged colors, such as three colors of red, blue, and green in a row.

The colorbit (R) is bit data having a bit value, that is '1' or '0', predetermined according to a mode of change in adjacent colors. For example, when colors change from red to blue, blue to green, or green to red, the bit is determined to be '1', and when colors change from red to green, green to blue, or blue to red, the bit is determined to be '0'.

The image data of the identification information T1, T2, T3...T25 captured by the imaging unit 10 may be blurred due to fading or deformation of the identification information T1, T2, T3...T25 according to the behavior or growth of domestic animals. Even in this case, if the identification information T1, T2, T3...T25 are the colorbit (R), it is possible to reduce the risk that the content of identification information cannot be identified from the image data of the identification information T1, T2, T3...T25 captured by the imaging unit 10.

The identification information T1, T2, T3...T25 may be a combination of a numeral, an alphabet, a character, a symbol and so on, or a bar code. That is, the identification information T1, T2, T3...T25 may be anything identifying each of the domestic animals 501, 502, 503... 525 by being captured by the imaging unit 10.

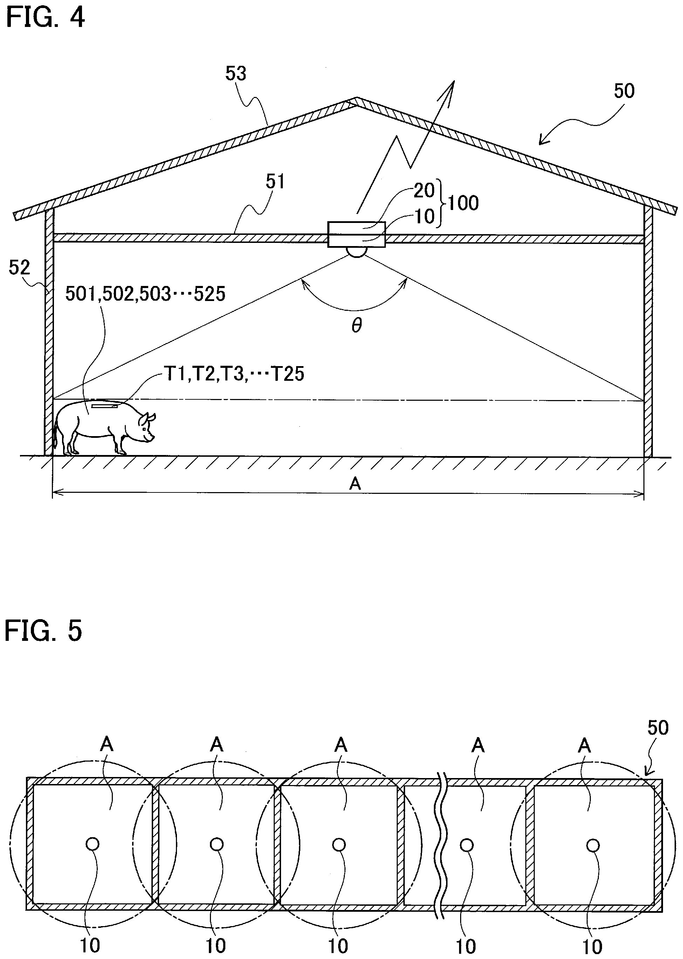

With reference to Figs. 4 and 5, a range captured by the imaging unit 10 of the domestic animal information management system 100 of the present embodiment is described.

As shown in Fig. 4, the imaging unit 10 of the present embodiment is provided face down on the ceiling 51 of the barn 50 to capture a space below the ceiling 51. The imaging unit 10 in the present embodiment is in a fixed position and thus acquires only the image data of a space within a range of a solid angle defined by an angle θ shown in Fig. 4. Accordingly, a plane area captured by the imaging unit 10 is a circular area as shown in Fig. 5. However, a circular room is not suitable for the barn 50, and thus the predetermined area A in the barn 50 is a plane area in a square inscribed in the circular plane area captured by the imaging unit 10.

When the barn 50 has multiple predetermined areas A, each of the multiple predetermined areas A is surrounded by walls 52 and covered by a roof 53 as shown in Fig. 4. Accordingly, the at least one domestic animal 501, 502, 503...525 can move only in the predetermined area A.

In the present embodiment, a single camera is used as the imaging unit 10. However, multiple cameras may make up the imaging unit 10. In that case, the predetermined area A is included in the whole of multiple regions included in multiple pieces of image data acquired by the multiple cameras. Accordingly, by increasing the number of cameras making up the imaging unit 10 in the predetermined area A, the size of the predetermined area A where domestic animals can move is increased without decreasing the resolution of the image data acquired by the imaging unit 10. In this case, it is possible to increase the number of domestic animals to be managed in one predetermined area A.

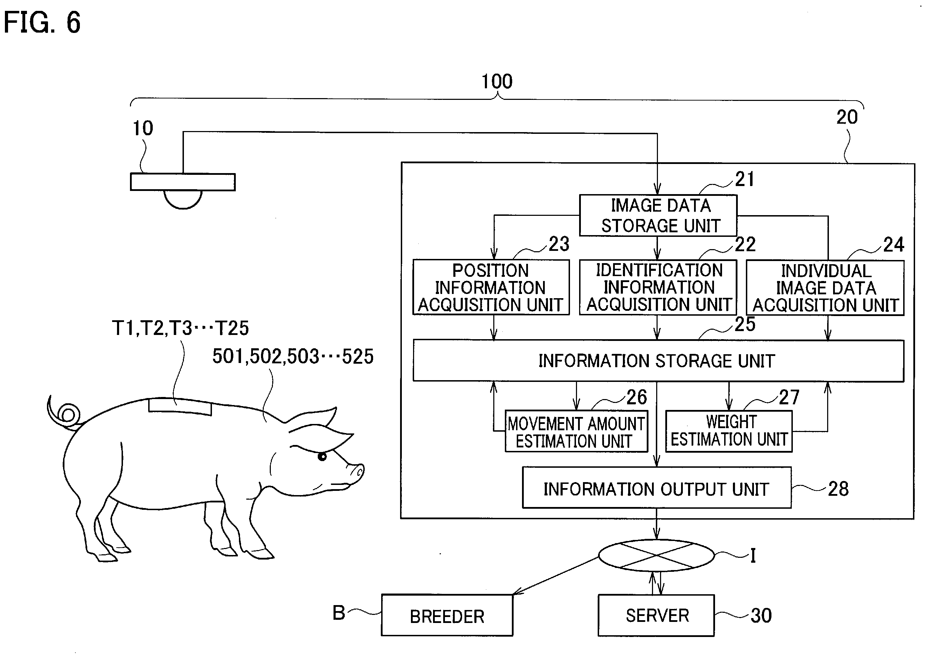

With reference to Fig. 6, functions of the domestic animal information management system 100 of the present embodiment are described.

As shown in Fig. 6, the domestic animal information management system 100 includes the imaging unit 10 and the control unit 20. In the domestic animal information management system 100 of the present embodiment, all functions are provided in one device. That is, the domestic animal information management system 100 is one device into which the imaging unit 10 and the control unit 20 are integrated.

However, the domestic animal information management system 100 may have its functions distributed across multiple devices. For example, the domestic animal information management system 100 may be composed of two devices into which the imaging unit 10 and the control unit 20 are separated from each other.

The imaging unit 10 acquires the image data of the predetermined area A in which the domestic animals 501, 502, 503...525 can move. The imaging unit 10 is, for example, a single camera in all directions at a fixed position.

The control unit 20 receives the image data captured by the imaging unit 10 and creates predetermined information on the basis of the image data. Note that the control unit 20 is integrated with the imaging unit 10 in the present embodiment but may be a general-purpose personal computer or the like independent of the imaging unit 10. The imaging unit 10 and the control unit 20 only need to be communicably connected to each other whether wired or wireless and may communicate through a telecommunication network, such as the Internet.

The domestic animal information management system 100 is communicably connected to a server 30 and transmits the predetermined information stored therein or created by itself to the server 30. The server 30 of the present embodiment is one used in cloud computing. The server 30 receives and stores the predetermined information transmitted from the domestic animal information management system 100 through a telecommunication network, such as the Internet I.

The server 30 transmits the above-described predetermined information itself, or a domestic animal breeding method useful for a domestic animal breeder B, warning to be noticed by the domestic animal breeder B, and the like to a portable terminal, a personal computer, or the like of the domestic animal breeder B. As the useful domestic animal breeding information, information on types of feed, increase or decrease of the amount of feed, or the like is considered. As the warning information, information on diseases, injuries, or the like is considered. This enables the domestic animal breeder B to change the kind of or amount of feed for a domestic animal or to have a domestic animal diagnosed or treated by a veterinary. Moreover, when the predetermined information includes domestic animal weight information, the breeder B can determine whether to market a domestic animal as a product according to its weight.

However, the domestic animal information management system 100 may directly transmit the predetermined information itself, or information on a domestic animal breeding method, warning, or the like to a display device, such as a liquid crystal display, a personal computer, or the like used by the domestic animal breeder B without going through the server 30.

As shown in Fig. 6, the control unit 20 includes an image data storage unit 21, an identification information acquisition unit 22, a position information acquisition unit 23, an individual image data acquisition unit 24, an information storage unit 25, a movement amount estimation unit 26, a weight estimation unit 27, and an information output unit 28.

The image data storage unit 21 temporarily stores the image data acquired by the imaging unit 10. The image data storage unit 21 stores the image data acquired by the imaging unit 10 until reception of an order signal to delete the image data according to a user operation. However, the image data storage unit 21 may automatically delete stored image data at each stage where the stored image data becomes unnecessary. This reduces memory capacity of the image data storage unit 21.

The identification information acquisition unit 22 acquires the identification information T1, T2, T3...T25 of the domestic animals 501, 502, 503...525, respectively, on the basis of the image data of the predetermined area A. In this case, the identification information acquisition unit 22 reads the colorbit (R) as the identification information through image recognition.

The position information acquisition unit 23 acquires position information of each of the domestic animals 501, 502, 503...525 on the basis of the image data of the predetermined area A. Specifically, according to where a domestic animal corresponding to a piece of identification information is on the image data of the predetermined area A, the position information acquisition unit 23 determines the position of the domestic animal. In the present embodiment, the position information acquisition unit 23 determines the position of each of the domestic animals 501, 502, 503...525 according to a position of each of the identification information T1, T2, T3...T25 on the image data of the predetermined area A.

The individual image data acquisition unit 24 acquires individual image data of each of the domestic animals 501, 502, 503...525 on the basis of the image data of the predetermined area A. That is, the individual image data acquisition unit 24 individually cuts out only the individual image data of each of the domestic animals 501, 502, 503... 525 from the entire image data of the predetermined area A. In the present embodiment, the individual image data acquisition unit 24 creates projection form image data of each of the domestic animals 501, 502, 503...525 from the individual image data of each of the domestic animals 501, 502, 503...525.

The projection form image data is image data to identify only the contour of each of the domestic animals 501, 502, 503...525. The information storage unit 25 stores the identification information T1, T2, T3...T25, the position information, and the individual image data, specifically the projection form image data, in association with each other for each of the domestic animals 501, 502, 503...525.

As described above, in the present embodiment, the individual image data acquisition unit 24 acquires the projection form image data as the individual image data from the image data of the predetermined area A. However, the individual image data acquisition unit 24 may cut out the individual image data itself for each of the at least one domestic animal 501, 502, 503... 525 from the image data of the predetermined area A. In this case, the information storage unit 25 stores the position and the individual image data itself in association with each other for each of the at least one domestic animal 501, 502, 503...525. As a result, a relation between the position and the posture for each of the at least one domestic animal 501, 502, 503... 525 is understood, for example.

The information storage unit 25 stores the identification information T1, T2, T3...T25 and the position information as position time-series data for each of the domestic animals 501, 502, 503...525. The time-series data is a series of values having time information (time stamp). That is, the information storage unit 25 stores the identification information and the position information, and date and time information when the identification information and the position information are acquired, in association with each other for each of the domestic animals 501, 502, 503...525. In the present specification, the time-series data is an array in which an arbitrary date and time corresponds to data acquired on the arbitrary date and time. The date and time in this case does not necessarily have a fixed interval. According to the domestic animal information management system 100 of the present embodiment, the trajectory of movement of each of the domestic animals 501, 502, 503...525 is understood.

The information storage unit 25 stores information until reception of a signal to delete the information by a user operation. However, the information storage unit 25 may delete stored information at a stage where the stored information is no longer needed, for example, at a stage where another necessary information is made using the stored information. Moreover, the information storage unit 25 may delete stored information at a stage where the stored information or another necessary information made by using the stored information is transmitted from the information output unit 28 to another device. This reduces memory capacity of the information storage unit 25.

The movement amount estimation unit 26 estimates the amount of movement of each of the domestic animals 501, 502, 503...525 for a predetermined period, such as a day, according to the position time-series data stored in the information storage unit 25. Accordingly, the amount of movement of each of the domestic animals 501, 502, 503... 525 for a predetermined period is known. The amount of movement is the total sum of distances in all straight line parts in the trajectory of movement of a domestic animal.

The information storage unit 25 stores the amount of movement estimated by the movement amount estimation unit 26 as time-series data for each of the domestic animals 501, 502, 503...525. That is, the information storage unit 25 stores a certain movement amount, and date and time information when certain identification information and position information that are the basis of estimation of the certain movement amount are acquired, in association with each other. Accordingly, the transition of movement amounts of each of the domestic animals 501, 502, 503...525 for a predetermined period, such as a day, is understood.

The weight estimation unit 27 estimates the weight of each of the domestic animals 501, 502, 503...525 on the basis of the identification information T1, T2, T3...T25, the position information, and the individual image data (for example, projection form data) stored in the information storage unit 25. Accordingly, the domestic animal information management system 100 understands the weight of each of the domestic animals 501, 502, 503...525. The method of estimating the weight of each of the domestic animals 501, 502, 503...525 is described later.

The information storage unit 25 stores the weight estimated by the weight estimation unit 27 as time-series data for each of the domestic animals 501, 502, 503...525. That is, the information storage unit 25 stores a certain weight, and date and time information when certain identification information and position information that are the basis of estimation of the certain weight are acquired, in association with each other. Accordingly, the transition of weight of each of the domestic animals 501, 502, 503...525 for a predetermined period, such as a day, is understood.

The information output unit 28 has an antenna or the like and has a function for transmitting predetermined information through the antenna by radio wave. However, the information output unit 28 may transmit the predetermined information via a wired line to another device, and that device may transmit the predetermined information to the server 30 via the Internet I. The information output unit 28 transmits various information to the server 30, the various information including the date and time information, the identification information, the position time-series data, the movement amount, the weight, the weight time-series data, and the like, stored in association with each other in the information storage unit 25.

However, when the control unit 20 does not have the information output unit 28, the information storage unit 25 may be removed from the control unit 20 and mounted on another device. In this case, that device transmits information to the server 30, the information including the date and time information, the identification information, the movement amount information, the weight information, and the like stored in association with each other in the information storage unit 25.

The server 30 transmits the above-described various information to a portable terminal or a personal computer of the breeder B through communication means, such as the Internet I. As a result, the breeder B knows the condition of domestic animals he breeds.

The domestic animal information management system 100 or the subject of the domestic animal information management method in the present disclosure includes a computer as the control unit 20. The computer performs a domestic animal information management program to achieve the functions of the domestic animal information management system 100 or of the subject of the domestic animal information management method in the present disclosure. The domestic animal information management program operates the above-described computer as the above-described image data storage unit 21, the identification information acquisition unit 22, the position information acquisition unit 23, the individual image data acquisition unit 24, the information storage unit 25, the movement amount estimation unit 26, the weight estimation unit 27, and the information output unit 28.

The computer functioning as the control unit 20 includes a processor that operates according to the domestic animal information management program as a main hardware configuration. The processor may be any kind of processor that achieves the functions by executing the domestic animal information management program. The processor is configured by one or multiple electronic circuits including a semiconductor integrated circuit (IC) or a LSI (large scale integration). The multiple electronic circuits may be integrated on one chip or provided on multiple chips. The multiple chips may be integrated on one device or provided on multiple devices.

The domestic animal information management program is recorded on a non-transitory storage medium, such as a ROM (Read Only Memory), an optical disc, or a hard disk drive, readable for the above-described computer. The domestic animal information management program may be previously stored on the storage medium or supplied to the storage medium through a wide area network including the Internet.

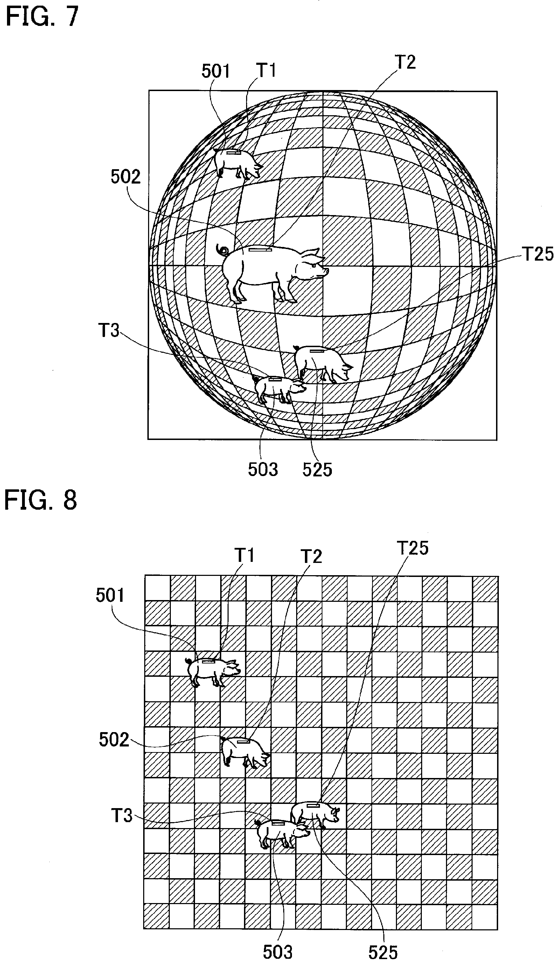

With reference to Figs. 7 and 8, image data acquired by the imaging unit 10 of the domestic animal information management system 100 in the present embodiment and image data into which the acquired image data is converted are described.

As described above, the imaging unit 10 in the present embodiment is a camera in all directions. Accordingly, as shown in Fig. 7, image data having the predetermined area A in a plane area as a circular area is acquired. The image data acquired by the imaging unit 10 is temporarily stored in the image data storage unit 21 and then deleted according to an instruction signal based on user's operation or automatically deleted at a stage where it becomes unnecessary. In the image data storage unit 21, the image data acquired by the imaging unit 10 is converted by mapping into image data having the predetermined area A as a square area.

As described above, the imaging unit 10 in the present embodiment is a camera in all directions. However, image data shown in Fig. 8 is directly acquired without acquiring the image data shown in Fig. 7, using a camera with an imaging surface rotatable around an axis extending in a vertical direction and rotatable around an axis extending in a horizontal direction.

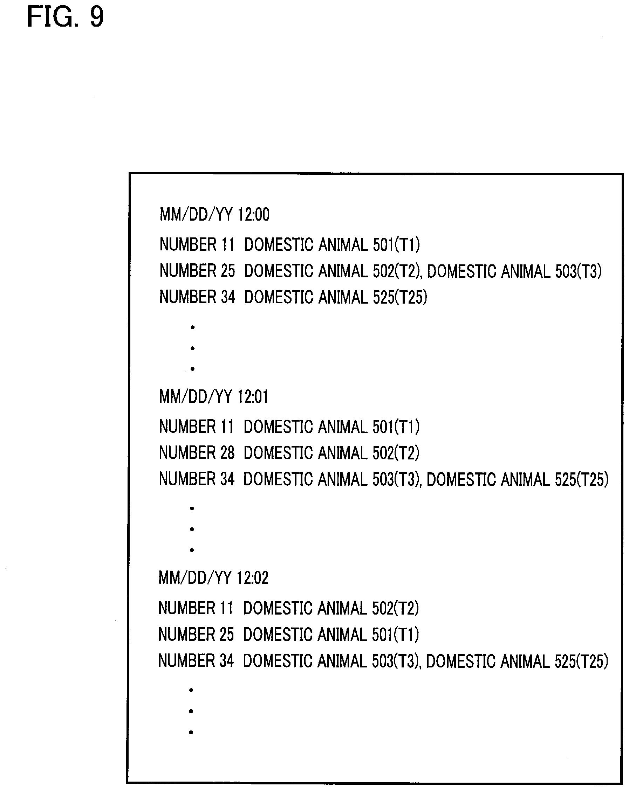

With reference to Figs. 9 to 11, a method of knowing the position and the movement amount of each of the at least one domestic animal 501, 502, 503...525 is described.

As described above, the identification information acquisition unit 22 acquires the identification information T1, T2, T3... T25 of the domestic animals 501, 502, 503...525, respectively, on the basis of the image data of the predetermined area A. The position information acquisition unit 23 acquires position information of each of the domestic animals 501, 502, 503...525 on the basis of the image data of the predetermined area A. As a result, as shown in Fig. 9, the information storage unit 25 stores the identification information T1, T2, T3...T25 and the position information (number) in association with each other as time-series data for each of the domestic animals 501, 502, 503...525.

For example, as shown in Fig. 9, the information storage unit 25 stores data in which the domestic animal 501 is at number 11, the domestic animal 502 and the domestic animal 503 are at number 25, and the domestic animal 525 is at number 34 on MM/DD/YY, at 12:00. Note that the above-described numbers are predetermined individual position information in the predetermined area A. The position of a domestic animal in the predetermined area A is identified by a numeral letter attached to each of the numbers.

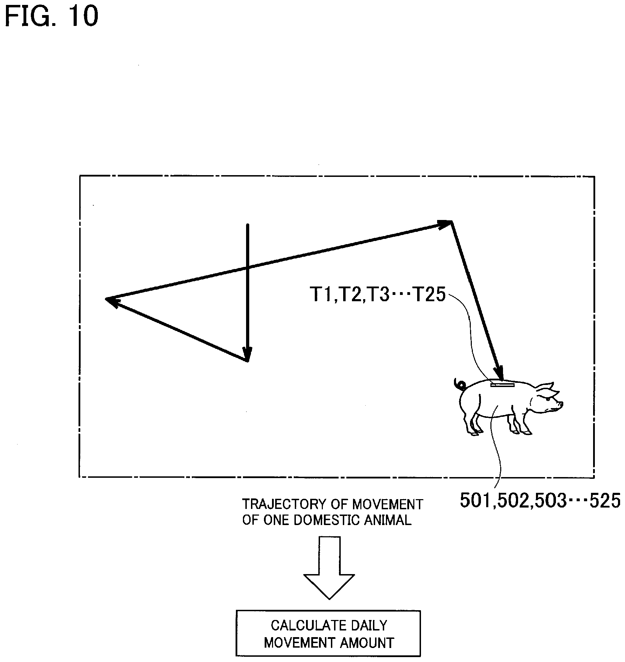

The information storage unit 25 in the present embodiment stores the identification information T1, T2, T3...T25 and the position information as the position time-series data for each of the domestic animals 501, 502, 503... 525. In the domestic animal information management system 100, the movement amount estimation unit 26 thus creates image data indicating the trajectory of movement of each of the domestic animals 501, 502, 503...525 shown in Fig. 10. In the present embodiment, the information storage unit 25 stores the image data indicating the trajectory of movement of each of the domestic animals 501, 502, 503...525 created by the movement amount estimation unit 26.

The domestic animal information management system 100 transmits the image data indicating the trajectory of movement of each of the domestic animals 501, 502, 503...525 stored in the information storage unit 25 shown in Fig. 10 from the information output unit 28 to the server 30. On the basis of this, the server 30 understands a behavior pattern of each of the domestic animals 501, 502, 503...525. The behavior pattern may be understood by a user of the server 30 or artificial intelligence built into the server 30. However, the domestic animal information management system 100 may transmit the position time-series data stored in the information storage unit 25 from the information output unit 28 to the server 30 without creating the image data indicating the trajectory of movement of domestic animals. In this case, the server 30 creates the image data indicating the trajectory of movement of each of the domestic animals 501, 502, 503...525 shown in Fig. 10 on the basis of the position time-series data received from the domestic animal information management system 100.

Accordingly, the server 30 transmits warning information, such as unusual walking of the domestic animal 525, to a portable terminal, a personal computer, or the like of the breeder B on the basis of the image data indicating the trajectory of movement.

However, the domestic animal information management system 100 may directly transmit the image data indicating the trajectory of movement shown in Fig. 10 to the portable terminal, the personal computer, or the like of the breeder B. In this case, the breeder B himself determines whether the domestic animal 525 walks unusually.

Moreover, the information storage unit 25 stores the movement amount time-series data for a predetermined period, such as a day, of each of the domestic animals 501, 502, 503...525 estimated by the movement amount estimation unit 26 on the basis of the position time-series data. Accordingly, in the domestic animal information management system 100, the movement amount estimation unit 26 makes a graph indicating the transition of daily movement amounts of each of the domestic animals 501, 502, 503...525. In the present embodiment, the information storage unit 25 stores the graph indicating the transition of daily movement amounts of each of the domestic animals 501, 502, 503...525 made by the movement amount estimation unit 26.

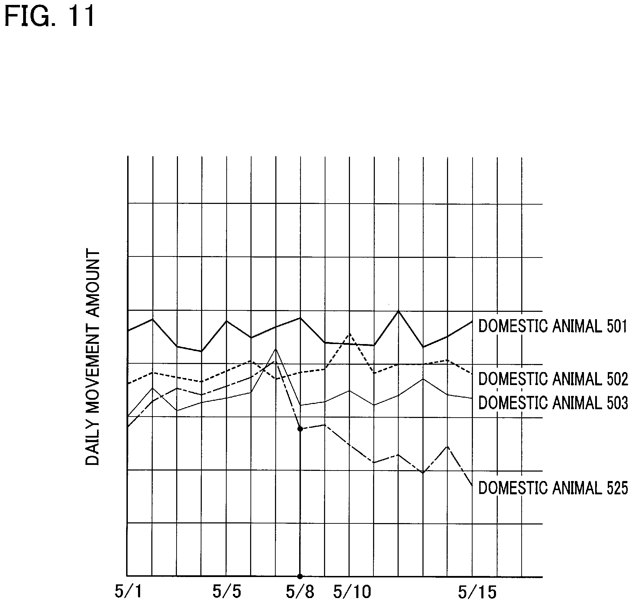

The domestic animal information management system 100 transmits the graph indicating the transition of daily movement amounts of each of the domestic animals 501, 502, 503...525 stored in the information storage unit 25 from the information output unit 28 to the server 30. On the basis of this, the server 30 understands the transition of daily movement amounts of each of the domestic animals 501, 502, 503...525. However, the domestic animal information management system 100 may transmit the movement amount time-series data of each of the domestic animals 501, 502, 503...525 stored in the information storage unit 25 from the information output unit 28 to the server 30 instead of the graph indicating the transition of movement amounts of domestic animals. In this case, the server 30 makes the graph indicating the transition of daily movement amounts of each of the domestic animals 501, 502, 503...525 shown in Fig. 11 on the basis of the movement amount time-series data received from the domestic animal information management system 100. As a result, it is known from Fig. 11 that the daily movement amount of the domestic animal 525 significantly decreases on May 8.

The server 30 thus transmits warning information or the like to a portable terminal, a personal computer, or the like of the breeder B to call attention to the domestic animal 525 whose daily movement amount significantly reduces on May 8. It is because the domestic animal 525 whose daily movement amount significantly reduces may have a possibility of disease or injury.

Accordingly, the breeder B can have the domestic animal 525 examined by a veterinary, given a medicine, or separated from other domestic animals 501, 502, 503. Note that artificial intelligence built into the server 30 or a user of the server 30 may determine whether the daily movement amount of the domestic animal 525 significantly reduces.

However, the domestic animal information management system 100 may transmit the graph indicating the transition of movement amounts shown in Fig. 11 directly to a portable terminal, a personal computer, or the like of the breeder B. In this case, the breeder B himself determines whether the daily movement amount of the domestic animal 525 significantly reduces or the like.

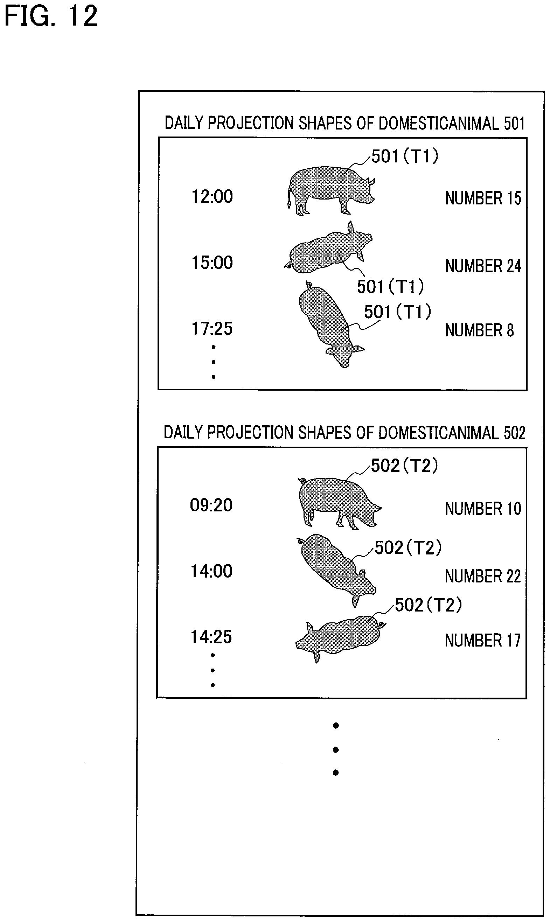

With reference to Figs. 12 to 14, a method of understanding the weight of each of the domestic animals 501, 502, 503...525 and its transition by the domestic animal information management system 100 is explained.

As seen from Fig. 12, the information storage unit 25 stores the individual image data (projection form data) in association with the identification information T1, T2, T3...T25 and the position information for each of the domestic animals 501, 502, 503...525. For example, as shown in Fig. 12, the information storage unit 25 stores the projection form data of the domestic animal 501 at 12:00 and the number 15 in association with each other, the number 15 being the position information on the domestic animal 501 when the projection form data is acquired. Moreover, for example, the information storage unit 25 stores the projection form data of the domestic animal 502 at 9:20 and the number 10 in association with each other, the number 10 being the position information on the domestic animal 502 when the projection form data is acquired. However, the information storage unit 25 may store several pieces of patterned numerical data extracted from the individual image data or the projection form data, instead of the individual image data itself or the projection form data. This reduces the memory capacity of the information storage unit 25. For example, the patterned numerical data is numerical data of the length, the area, or the like of a particular part in the individual image data when a domestic animal is viewed from the side, in the individual image data when the domestic animal is viewed from the top, or in the individual image data when the domestic animal is viewed from the front.

In the present embodiment, the individual image data is data having only the contour extracted from the individual image data of a domestic animal itself, that is, the projection form data in which a shadow of the domestic animal is projected on a plane area. In the present specification, the projection form data is an example of the individual image data. The individual image data may not be the image data indicating the contour of a domestic animal but may be image data of the domestic animal itself cut out from the image data of the predetermined area A, for example. Moreover, the individual image data may be a combination of the image data of a domestic animal itself cut out from the image data of the predetermined area A and image data of the shadow of the domestic animal.

As shown in Fig, 13, the weight estimation unit 27 estimates the weight of each of the domestic animals 501, 502, 503...525 on the basis of the identification information T1, T2, T3...T25, the position information, and the individual image data.

The following thesis (1) is available as a document disclosing technics for calculating the weight of domestic animals, for example. In this thesis (1), the weight of a domestic animal, such as a pig, is estimated from a volume value that is multiplied by the body height of the domestic animal estimated from multiple pieces of individual image data and a top projection area of the domestic animal.

Title of thesis (1): Development of a Method for Pig Weight Measurement by Image Analysis
Article number: Y151-H08660320
Author: Hideo Minagawa, Kitasato University
Publication matter: 1996-1998
Note: Ministry of Education scientific research subsidy research result report

Moreover, other than the technique described in the above thesis (1), the weight of a domestic animal can be estimated by a technique described in the following thesis (2) using the body height of the domestic animal estimated from multiple pieces of individual image data and a top projection area of the domestic animal.

Title of thesis (2): Development of a System for Pig Weight Measurement by Image Analysis
Article number: Y151-H1160263
Author: Hideo Minagawa, Kitasato University
Publication matter: 1999-2001
Note: Ministry of Education scientific research subsidy research result report
The above theses (1) and (2) are available in Japanese National Diet Library.

The present embodiment differs from the above methods of the theses (1) and (2) in that the weight estimation unit 27 uses the position information and the individual image data of each of the domestic animals 501, 502, 503...525 for weight estimation. As described above, the individual image data in the present embodiment is image data of the contour of each of the domestic animals 501, 502, 503...525.

Moreover, the weight estimation unit 27 selects predetermined several pieces, for example 20 pieces, of the individual image data of a domestic animal, necessary for estimating the body height of the domestic animal, from multiple pieces, for example 1000 pieces, of the individual image data of the domestic animal captured by the imaging unit 10. Note that the body height of a domestic animal is defined as a distance from the lower end of legs to the highest part of the back of the domestic animal in standing form in its image data.

When the predetermined area A is large, the predetermined several pieces of individual image data of a particular domestic animal necessary for estimating the body height of the domestic animal are obtained by using multiple cameras as the imaging unit 10. That is, the particular domestic animal that is not injured or sick moves and changes its postures in a day, so that the several pieces of individual image data necessary for estimating the body height of the domestic animal are obtained in a day.

Then, the weight estimation unit 27 uses the selected several pieces of individual image data of the particular domestic animal and several pieces of position information respectively corresponding to the several pieces of individual image data to estimate the body height of the particular domestic animal. In the present embodiment, each of the several pieces of individual image data is a piece of projection form data from the side of (may not be just beside) the particular domestic animal in standing form. Moreover, using the position information, an angle between a horizontal surface and a line connecting the imaging unit 10 and a piece of identification information attached to a particular domestic animal is calculated. Accordingly, using the position information, the body height in the projection form data when viewed from just beside the particular domestic animal is estimated on the basis of the body height in the projection form data from the side of the particular domestic animal and the position information on the particular domestic animal. Moreover, the average of estimated several body heights is considered to be approximate to the actual body height of the particular domestic animal.

Moreover, the weight estimation unit 27 estimates the top projection area within the contour of a horizontal section of a particular domestic animal, using the top projection form data of the particular domestic animal in standing form. The top projection area is an area within the contour of a domestic animal in the projection form data captured from almost above the domestic animal. Specifically, as a top projection image of a domestic animal, a corrected top projection image is used, in which top projection images of the ears and the tail are removed from the whole top projection image of the domestic animal captured from almost above the domestic animal. However, the weight estimation unit 27 may estimate the weight using the patterned numerical data or the like stored in the information storage unit 25 as described above, instead of the body height and the area in the projection form data.

Note that when the predetermined area A is large, by using multiple cameras as the imaging unit 10, any one of the multiple cameras obtains the top projection form data captured from just above a particular domestic animal in standing form. The particular domestic animal that is not injured or sick stands up at least one time and moves in a day, so that the top projection form data of the particular domestic animal is obtained in a day.

Then, the weight estimation unit 27 obtains the weight of a domestic animal using the estimated body height of the domestic animal and the area of region within the contour in the top projection form data, and a predetermined function or a data table acquired from experiments.

Moreover, the weight estimation unit 27 may obtain multiple combinations of the identification information T1, T2, T3...T25, the position information, and the individual image data, for example. In this case, the weight estimation unit 27 estimates the three-dimensional shape of each of the domestic animals 501, 502, 503...525 using multiple combinations of the identification information, the position information, and the individual image data. The weight estimation unit 27 estimates the weight of a domestic animal by multiplying the volume of the domestic animal calculated on the basis of the estimated three-dimensional shape and a pre-measured average density of a domestic animal of the same type as the domestic animal whose volume is calculated.

As known from the above, the weight estimation unit 27 may be anything that estimates the weight of each of the domestic animals 501, 502, 503...525 using the identification information T1, T2, T3...T25, the position information, and the individual image data.

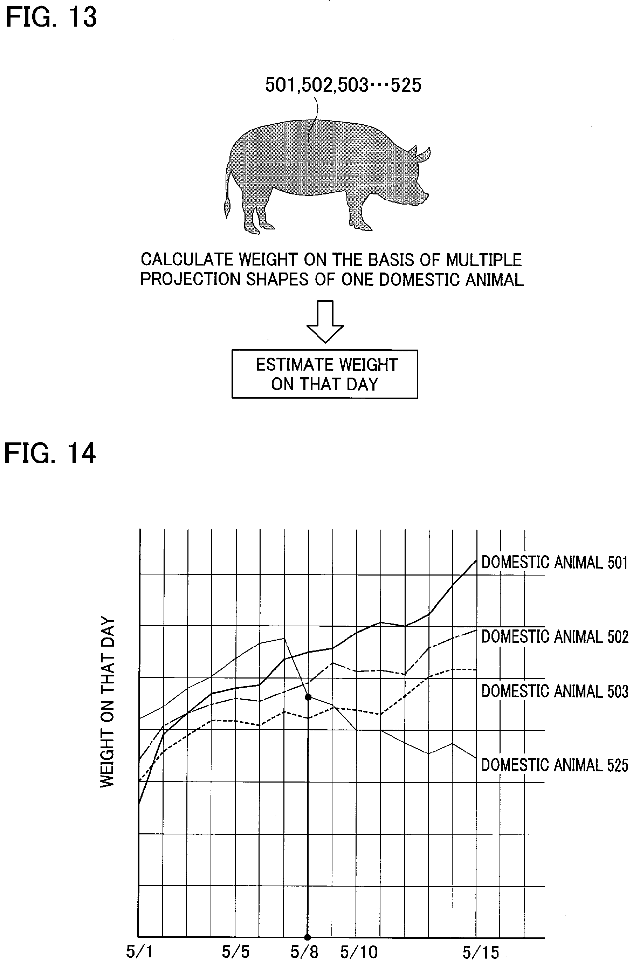

The domestic animal information management system 100 in the present embodiment understands the weight of each of the domestic animals 501, 502, 503...525, as shown in Fig. 13.

Moreover, as known from the above description using Figs. 12 and 13, the information storage unit 25 stores the weight as time-series data for each of the domestic animals 501, 502, 503... 525 estimated by the weight estimation unit 27. The point of determination of the weight on one day is a predetermined reference time, for example 23:59:59. The weight on that day is the average of several weights of a domestic animal estimated on the basis of multiple pieces of individual image data between an estimation start time on that day, for example 0 o'clock, and the reference time. Accordingly, the transition of daily weight of each of the domestic animals 501, 502, 503... 525 is understood, as shown in Fig. 14.

The weight estimation unit 27 makes a graph indicating the transition of daily weight of each of the domestic animals 501, 502, 503...525 shown in Fig. 14 on the basis of the weight time-series data of each of the domestic animals 501, 502, 503... 525. The information storage unit 25 stores the graph indicating the transition of daily weight of each of the domestic animals 501, 502, 503...525 shown in Fig. 14. The information output unit 28 transmits the graph indicating the transition of daily weight of each of the domestic animals 501, 502, 503...525 shown in Fig. 14 stored in the information storage unit 25 to the server 30. On the basis of this, the server 30 understands the transition of daily weight of each of the at least one domestic animal 501, 502, 503...525. However, the domestic animal information management system 100 may transmit the weight time-series data of each of the domestic animals 501, 502, 503... 525 stored in the information storage unit 25 from the information output unit 28 to the server 30. In this case, the server 30 makes the graph indicating the transition of daily weight of each of the domestic animals 501, 502, 503...525 shown in Fig. 14 on the basis of the weight time-series data received from the domestic animal information management system 100.

In either case, the server 30 transmits warning information or the like to a portable terminal, a personal computer, or the like of the breeder B on the basis of the graph indicating the transition of daily weight shown in Fig. 14. This warning information is for calling attention of the breeder B to the domestic animal 525 that has lost daily weight significantly on May 8. The reason of transmitting this warning information is that the domestic animal 525 with a significant daily weight loss may have a possibility of disease or injury. Note that the artificial intelligence built into the server 30 or a user of the server 30 may determine whether the daily weight of the domestic animal 525 on one day has decreased significantly.

However, the domestic animal information management system 100 may transmit the graph indicating the transition of daily weight shown in Fig. 14 directly to a portable terminal, a personal computer, or the like of the breeder B. In this case, the breeder B himself determines whether to have the domestic animal 525 examined by a veterinary, given a medicine, or separated from other domestic animals 501, 502, 503 on the basis of the graph indicating the transition of daily weight show in Fig. 14.

Moreover, the breeder B can control inefficient feed provision for domestic animals by reducing feed for a domestic animal gaining more weight than necessary. Furthermore, the breeder B can increase feed for a domestic animal not reaching a necessary weight level. Moreover, the breeder B can determine, for example, whether to market a domestic animal as a product from its weight and estimate the timing of marketing from the transition of weight of the domestic animal.

Note that as the domestic animal information management method, the breeder B may execute the whole or a part of functions executed by the imaging unit 10 and the control unit 20 of the domestic animal information management system 100.

A characteristic configuration of the domestic animal information management system 100 of the present embodiment and its effects are described below.
(1) In the domestic animal information management system 100, the identification information T1, T2, T3...T25 are used on at least one domestic animal 501, 502, 503...525, respectively. The identification information T1, T2, T3...T25 identify the at least one domestic animal 501, 502, 503...525, respectively. The domestic animal information management system 100 includes the imaging unit 10, the identification information acquisition unit 22, the position information acquisition unit 23, and the information storage unit 25. The imaging unit 10 acquires image data of the predetermined area A where the at least one domestic animal 501, 502, 503...525 can move. The identification information acquisition unit 22 acquires each of the identification information T1, T2, T3...T25 of the at least one domestic animal 501, 502, 503...525 on the basis of the image data of the predetermined area A. The position information acquisition unit 23 acquires the position information on each of the at least one domestic animal 501, 502, 503...525 on the basis of the image data of the predetermined area A. The information storage unit 25 stores the identification information T1, T2, T3...T25 and the position information in association with each other for each of the at least one domestic animal 501, 502, 503...525. Accordingly, the position information on each of the at least one domestic animal 501, 502, 503...525 is understood.
(2) The identification information T1, T2, T3... T25 may be bit data in which a bit value is predetermined according to a mode of change in adjacent colors in order to show discrimination with an array of different colors. Accordingly, the imaging unit 10 obtains the identification information T1, T2, T3...T25 more surely.
(3) The information storage unit 25 may store the identification information T1, T2, T3...T25 and the position information as position time-series data for each of the at least one domestic animal 501, 502, 503...525. Accordingly, the trajectory of movement of each of the at least one domestic animal 501, 502, 503...525 is understood.
(4) The domestic animal information management system 100 may further include the movement amount estimation unit 26 that estimates the movement amount of each of the at least one domestic animal 501, 502, 503...525 in the predetermined period on the basis of the above-described position time-series data. Accordingly, the movement amount of each of the at least one domestic animal 501, 502, 503...525 in the predetermined period is understood.
(5) The information storage unit 25 may store the above-described movement amount as time-series data for each of the at least one domestic animal 501, 502, 503...525. Accordingly, the transition of movement amounts of each of the at least one domestic animal 501, 502, 503...525 is understood.
(6) The individual image data acquisition unit 24 that acquires the individual image data of each of the at least one domestic animal 501, 502, 503... 525 on the basis of the image data of the predetermined area A may further be included. In this case, the information storage unit 25 preferably stores the identification information T1, T2, T3...T25, the position information, and the individual image data in association with each other for each of the at least one domestic animal 501, 502, 503...525. Accordingly, the position of each of the at least one domestic animal 501, 502, 503...525 and the individual image data at that position are understood in association with each other.
(7) The domestic animal information management system 100 preferably includes the weight estimation unit 27 estimating the weight of each of the at least one domestic animal 501, 502, 503...525 on the basis of the identification information T1, T2, T3...T25, the position information, and the individual image data. Accordingly, the weight of each of the at least one domestic animal 501, 502, 503...525 is understood.
(8) The information storage unit 25 may store the weight as time-series data for each of the at least one domestic animal 501, 502, 503...525. Accordingly, the transition of weight of each of the at least one domestic animal 501, 502, 503...525 is understood.
(9) The barn 50 of the present embodiment includes the domestic animal information management system 100 described in one of the above-described (1) to (8).
(10) The domestic animal information management program operates the computer as the identification information acquisition unit 22, the position information acquisition unit 23, and the information storage unit 25.
(11) In the domestic animal information management method of the present embodiment, the identification information T1, T2, T3...T25 are used on at least one domestic animal 501, 502, 503...525, respectively. The identification information T1, T2, T3...T25 identify the at least one domestic animal 501, 502, 503...525, respectively.

The domestic animal information management method of the present embodiment executes the following steps. First, the identification information T1, T2, T3...T25 of the at least one domestic animal 501, 502, 503...525 are respectively acquired on the basis of the image data of the predetermined area A. The predetermined area A is an area imaged by the imaging unit 10, in which the at least one domestic animal 501, 502, 503...525 can move. Then, the position information on each of the at least one domestic animal 501, 502, 503... 525 is acquired on the basis of the image data of the predetermined area A. Next, the identification information T1, T2, T3...T25 and the position information are stored in association with each other for each of the at least one domestic animal 501, 502, 503...525. According to this method, the position information on each of the at least one domestic animal 501, 502, 503...525 is understood.

This application claims priority to Japanese Patent Application No. 2017-182839 filed on September 22, 2017, the entire contents of which is incorporated herein by reference.

### REFERENCE SIGNS LIST

- 10: Imaging unit
- 22: Identification information acquisition unit
- 23: Position information acquisition unit
- 25: Information storage unit
- 26: Movement amount estimation unit
- 27: Weight estimation unit
- 50: Barn
- 100: Domestic animal information management system
- 501, 502, 503...525: Domestic animals
- A: Predetermined area
- T1, T2, T3... T25: Identification information

## Claims

1. A domestic animal information management system in which identification information identifying a domestic animal is used on each of at least one domestic animal, comprising:
an imaging unit that acquires image data of a predetermined area in which the at least one domestic animal can move;
an identification information acquisition unit that acquires the identification information on each of the at least one domestic animal on the basis of the image data of the predetermined area;
a position information acquisition unit that acquires position information on each of the at least one domestic animal on the basis of the image data of the predetermined area; and
an information storage unit that stores the identification information and the position information in association with each other for each of the at least one domestic animal.

2. The domestic animal information management system according to claim 1, wherein the identification information is bit data in which a bit value is predetermined according to a mode of change in adjacent colors in order to show discrimination with an array of different colors.

3. The domestic animal information management system according to claim 1 or 2, wherein the information storage unit stores the identification information and the position information as position time-series data for each of the at least one domestic animal.

4. The domestic animal information management system according to claim 3, further comprising: a movement amount estimation unit that estimates a movement amount of each of the at least one domestic animal in a predetermined period on the basis of the position time-series data.

5. The domestic animal information management system according to claim 4, wherein the information storage unit stores the movement amount as time-series data for each of the at least one domestic animal.

6. The domestic animal information management system according to any one of claims 1 to 5, further comprising: an individual image data acquisition unit that acquires individual image data of each of the at least one domestic animal on the basis of the image data of the predetermined area,
wherein the information storage unit stores the identification information, the position information, and the individual image data in association with each other for each of the at least one domestic animal.

7. The domestic animal information management system according to claim 6, further comprising: a weight estimation unit that estimates weight of each of the at least one domestic animal on the basis of the identification information, the position information, and the individual image data.

8. The domestic animal information management system according to claim 7, wherein the information storage unit stores the weight as time-series data for each of the at least one domestic animal.

9. A barn comprising: the domestic animal information management system according to any one of claims 1 to 8.

10. A domestic animal information management program used for a domestic animal information management system in which identification information identifying a domestic animal is used on each of at least one domestic animal,
wherein the domestic animal information management program operates a computer as:
an identification information acquisition unit that acquires the identification information on each of the at least one domestic animal on the basis of image data of a predetermined area, in which the at least one domestic animal can move, captured by an imaging unit;
a position information acquisition unit that acquires position information on each of the at least one domestic animal on the basis of the image data of the predetermined area; and
an information storage unit that stores the identification information and the position information in association with each other for each of the at least one domestic animal.

11. A domestic animal information management method in which identification information identifying a domestic animal is used on each of at least one domestic animal, comprising:
a step of acquiring the identification information on each of the at least one domestic animal on the basis of image data of a predetermined area, in which the at least one domestic animal can move, acquired by an imaging unit;
a step of acquiring position information on each of the at least one domestic animal on the basis of the image data of the predetermined area; and
a step of storing the identification information and the position information in association with each other for each of the at least one domestic animal.
